## Europäisches Patentamt

## European Patent Office

## Office européen des brevets

(19)

(11) Numéro de publication: **0 166 286**
**B1**

(12) **FASCICULE DE BREVET EUROPÉEN**

(45) Date de publication du fascicule du brevet:
**10.08.88**

(51) Int. Cl.⁴: **F 16 K 1/226**, F 16 K 1/228

(21) Numéro de dépôt: **85107099.5**

(22) Date de dépôt: **08.06.85**

(54) **Joint d'étanchéité pour vanne à obturateur rotatif et son procédé de fabrication.**

(30) Priorité: **27.06.84 FR 8410289**

(43) Date de publication de la demande:
**02.01.86 Bulletin 86/1**

(45) Mention de la délivrance du brevet:
**10.08.88 Bulletin 88/32**

(84) Etats contractants désignés:
**BE DE GB IT LU NL**

(56) Documents cité:
**DE-A-1 500 093**
**FR-A-1 577 185**
**US-A-4 266 752**
**US-A-4 289 296**
**US-A-4 304 392**

(73) Titulaire: **G.R.I.- SAPAG, Zone Industrielle de la Croix de Metz, F-54200 Toul (FR)**

(72) Inventeur: **Souplet, Robert, 19, rue Ludovic Beauchet, F-54000 Nancy (FR)**
Inventeur: **Sutter, Jean, 13, rue des Côteaux, F-54600 Villers les Nancy (FR)**

(74) Mandataire: **Puit, Thierry, Centre de Recherches de Pont- à- Mousson Service de Propriété Industrielle Boîte Postale 109, F-54704 Pont- à- Mousson Cédex (FR)**

LIBER, STOCKHOLM 1988

2

## Description

La présente invention concerne un joint d'étanchéité pour une vanne et son procédé de fabrication, et plus particulièrement un joint d'étanchéité résistant aux hautes températures et aux hautes pressions, destiné à une vanne comportant un obturateur rotatif.

En général, un joint élastique, par exemple en matériau élastomère est utilisé pour assurer l'étanchéité entre un corps de robinet et son obturateur pivotant. Les joints de ce type assurent correctement cette fonction lorsque la température du fluide traversant le robinet ne dépasse pas 120°C, lorsque la pression est inférieure à environ 20 bar, et lorsque le fluide ne dégrade pas le matériau constituant le joint.

Mais lorsque les conditions d'utilisation deviennent plus sévères du fait de températures, de pressions plus élevées et de l'agressivité du liquide transporté, les joints d'étanchéité en matériau élastomère ne conviennent plus et on fait alors appel à d'autres matériaux tels que les polymères d'hydrocarbures fluorés dont le plus connu est le polytétrafluoroéthylène (P.T.F.E.). Ces matériaux sont inertes vis-à-vis de nombreux fluides et peuvent aussi résister à des pressions et des températures bien plus élevées que celles que peuvent supporter les matériaux élastomères. Toutefois, ces polymères d'hydrocarbures fluorés ont les inconvénients suivants lorsqu'ils ont été soumis à une déformation, ils ne reprennent leur forme initiale que très lentement et lorsqu'ils sont soumis à une déformation prolongée, soit en compression, soit en traction, ils se déforment de façon quasi-permanente, phénomène bien connu sous le nom de fluage. Il en résulte que lorsqu'un joint d'étanchéité est comprimé durant une longue période entre le corps du robinet et l'obturateur, il se déforme progressivement et n'assure plus une étanchéité correcte. Pour éviter ce phénomène, il est connu d'entourer le joint d'étanchéité par un ou plusieurs anneaux élastiques qui l'empêchent de fluer radialement. Le joint ainsi fretté procure une étanchéité satisfaisante. Toutefois, lorsque le fluide traversant le robinet est agressif vis-à-vis des métaux ordinaires, le ou les anneaux élastiques frettant le joint d'étanchéité doivent être réalisés en métaux nobles résistant à la corrosion, ce qui rend onéreuse la fabrication du joint.

Une solution pour éviter cet inconvénient consiste à noyer le ou les anneaux élastiques dans le matériau du joint d'étanchéité, par surmoulage par exemple. Cette technique connue est facile à mettre en oeuvre lorsque le joint d'étanchéité est réalisé en matériau élastomère, celui-ci se moulant commodément. Par contre, cette même technique ne peut être employée lorsque le matériau du joint est du P.T.F.E. pur ou mélangé à une charge telle que de la poudre de carbone ou de la poudre d'acier inoxydable. En effet, la fabrication d'une pièce en P.T.F.E met en oeuvre un frittage qui consiste en un compactage sous très forte pression d'une poudre placée dans un moule, suivi d'une cuisson de la pièce moulée assurant la liaison par fusion des grains de la poudre compactée. Il résulte de la technique particulière requise pour la fabrication de pièces en P.T.F.E. que le surmoulage d'un anneau élastique à l'intérieur d'un joint d'étanchéité présente des difficultés quasi insurmontables car, lors du compactage de la poudre, l'anneau se déplace et sa position est indéterminée. En outre, lors de la cuisson, le joint d'étanchéité muni de son anneau se déforme de façon incontrôlée, le coefficient de dilatation du P.T.F.E. étant environ dix fois plus élevé que celui du matériau constituant l'anneau.

On connaît par le brevet US-A-4 266 752 un joint d'étanchéité destiné à être monté dans un robinet à papillon. Ce joint est composé d'un anneau en Teflon (Teflon est une marque déposée par Du Pont de Nemours) comportant une partie massive et une collerette annulaire coaxiale. Dans la partie massive est ménagée une cavité dans laquelle est logé un anneau réalisé en un matériau ayant un coefficient de Poisson élevé et un faible module d'Young. Ce joint, dans son fonctionnement, met en jeu l'effet de Poisson.

La Demanderesse s'est posé le problème de fournir un joint d'étanchéité en polymère d'hydrocarbure fluoré muni d'un anneau élastique qui l'empêche de fluer à froid et lui confère de bonnes qualités mécaniques lors de l'utilisation avec des fluides chauds.

L'invention concerne un joint d'étanchéité tel que défini dans le préambule de la revendication 1 et caractérisé dans la deuxième partie de la revendication.

Des modes de réalisation avantageux du joint d'étanchéité sont définis par les caractéristiques des revendications dépendantes 2 à 6.

L'invention concerne encore un procédé de fabrication d'un joint selon l'invention, ce procédé est caractérisé dans les revendications 7 et 8.

D'autres caractéristiques et avantages de l'invention apparaîtront au cours de la description qui va suivre, faite en référence aux dessins annexés, donnés uniquement à titre d'exemple non limitatif et parmi lesquels:

- Fig. 1 est une vue en coupe diamétrale d'une vanne papillon munie d'un joint d'étanchéité selon l'invention;

- Fig. 2 est une vue en coupe radiale partielle à plus grande échelle d'une gorge de la vanne destinée à recevoir le joint d'étanchéité selon l'invention;

- Fig. 3 est une vue partielle en coupe radiale également à plus grande échelle d'un joint d'étanchéité selon l'invention, appliqué contre l'obturateur;

- Fig. 4 est une vue partielle en coupe radiale à grande échelle d'un joint d'étanchéité selon l'invention, monté dans sa gorge;

- Fig. 5 est une vue en coupe radiale à grande échelle montrant la position du joint dans sa gorge lorsque la pression du fluide s'exerce du

côte amont de l'obturateur;

- Fig. 6 est une vue en coupe radiale à grande échelle montrant la position du joint dans sa gorge lorsque la pression du fluide s'exerce du côté aval de l'obturateur;

- Fig. 7 est une vue en coupe radiale à grande échelle d'une première variante de réalisation du joint d'étanchéité;

- Fig. 8 est une vue en coupe radiale à grande échelle d'une deuxième variante de réalisation du joint d'étanchéité;

- Fig. 9 est une vue en coupe radiale à grande échelle d'une troisième variante de réalisation du joint d'étanchéité;

- Fig. 10 est une vue en coupe radiale à granche échelle d'une quatrième variante de réalisation du joint d'étanchéité;

- Fig. 11 est une vue en coupe radiale à grande échelle montrant la position du joint d'étanchéité de la Figure 10 dans sa gorge lorsque la pression du fluide s'exerce du côté aval de l'obturateur;

- Fig. 12, Fig. 13, Fig. 14 sont des vues en coupe radiale représentant schématiquement le procédé de fabrication d'un joint d'étanchéité selon l'invention;

- Fig. 15, Fig. 16, Fig. 17 sont des vues en coupe radiale représentant la fabrication d'un joint d'étanchéité et les outillages utilisés;

- Fig. 18, Fig. 19, Fig. 20, Fig. 21 sont des vues en coupe radiale représentant schématiquement le procédé de fabrication de la variante de joint d'étanchéité apparaissant à la figure 7;

- Fig. 22, Fig. 23 sont des vues en coupe radiale représentant schématiquement le procédé de fabrication de la variante de la figure 8.

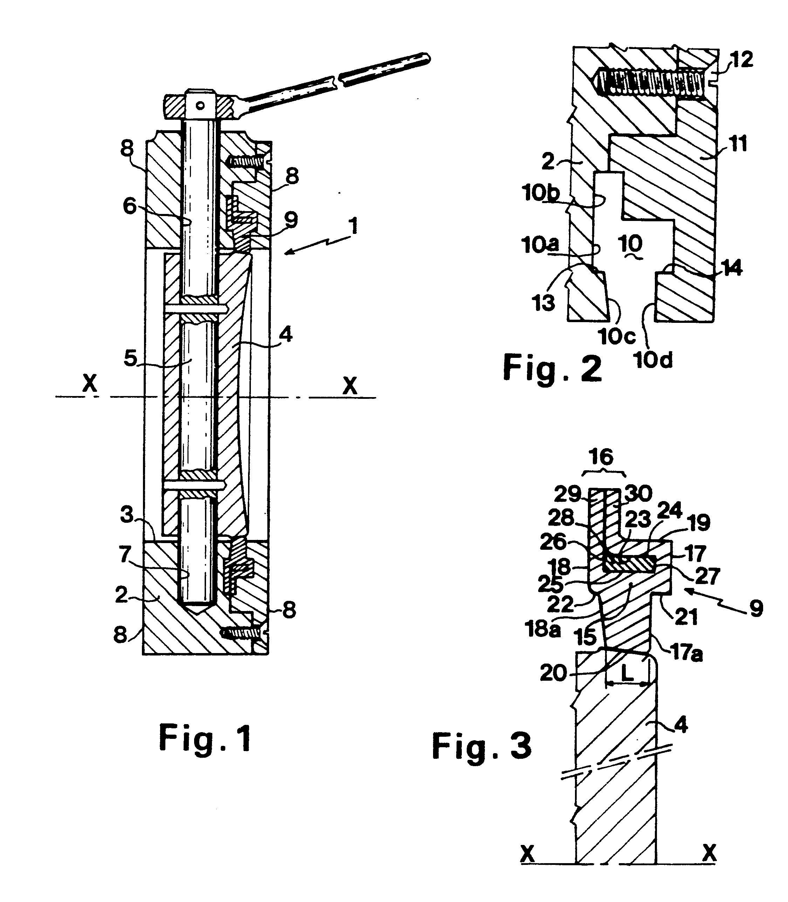

La vanne papillon 1 représentée à la figure 1 comprend un corps 2 percé d'un canal axial 3 d'axe X-X qui peut être fermé par un obturateur 4 fixé sur un arbre rotatif 5 tourillonnant dans deux alésages 6 et 7 diamétralement opposés du corps 2 qui se termine par deux faces 8 annulaires planes parallèles entre elles permettant la fixation de la vanne entre deux brides opposées, non représentées, de deux sections voisines d'une canalisation. Le fluide peut circuler dans le canal axial 3 dans un sens ou dans l'autre. Un joint d'étanchéité 9 élastique conforme à l'invention est disposé dans une gorge 10 représentée à la Figure 2, usinée en partie dans le corps 2 et en partie dans une bague de retenue 11 annulaire fixée au corps 2 par des vis à tête noyée 12. La gorge 10 comprend une partie large 10a débouchant dans le canal axial 3 et une partie borgne 10b plus étroite dirigée radialement vers l'extérieur de la vanne. La partie large 10a de la gorge 10 est munie de deux épaulements 13 et 14 faisant saillie au niveau du débouché sur le canal 3. L'épaulement 14 est formé par le raccordement d'une surface radiale 10d adjacente au canal 3 avec l'une des faces latérales radiales de la partie large 10a de la gorge 10 tandis que l'épaulement 13 est formé par le raccordement d'une surface tronconique 10c adjacente au canal 3, d'axe de révolution X-X, avec l'autre face latérale radiale de la partie large 10a de la gorge 10.

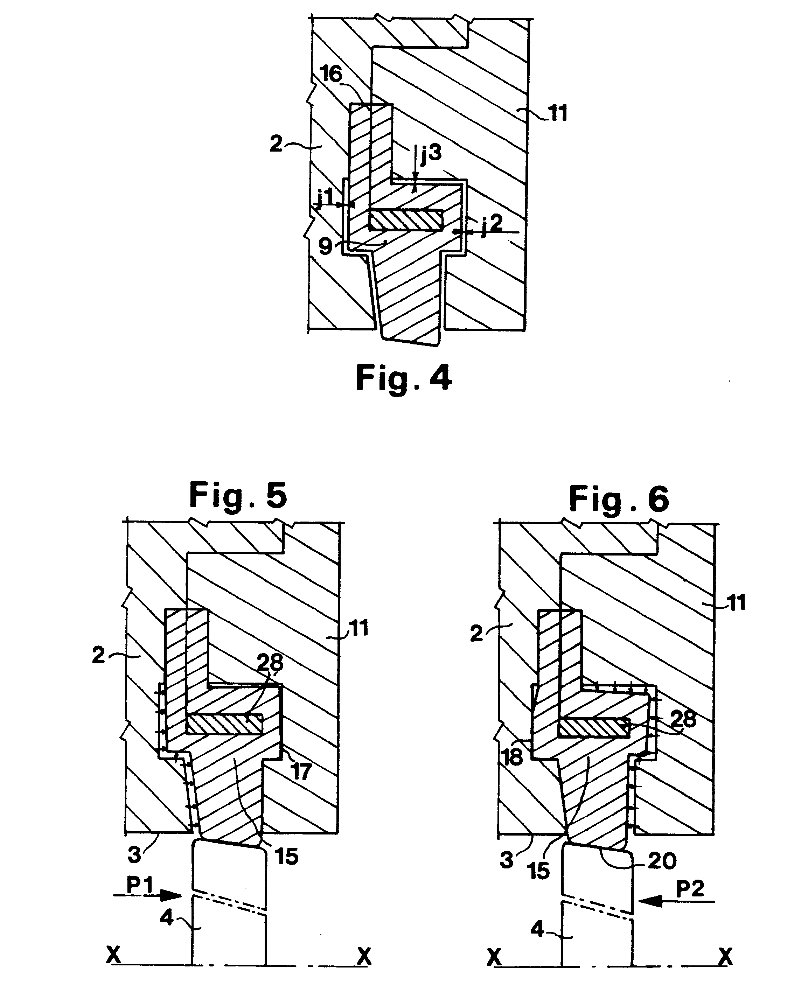

Le joint d'étanchéité 9 élastique, représenté à la Figure 3, est constitué d'une partie massive 15, en forme d'anneau circulaire, dont le bord extérieur est entouré par une collerette annulaire 16.

La partie massive 15 du joint d'étanchéité est délimitée, latéralement, par deux surfaces radiales parallèles 17 et 18 se raccordant respectivement par des épaulements 21 et 22 à une surface radiale 17a et à une surface tronconique 18a, de même conicité que la surface 10C de la gorge 10, radialement vers l'extérieur, par une surface 19 axiale perpendiculaire aux surfaces 17 et 18, radialement vers l'intérieur par une surface 20 tronconique d'axe de révolution X-X. L'obturateur 4, en position de fermeture du canal axial 3 est en contact avec le joint d'étanchéité par cette surface tronconique 20. Les épaulements 21 et 22, sont destinés à venir prendre appui sur les épaulements 13 et 14 correspondants de la partie large 10a de la gorge 10. Ils assurent la rétention du joint d'étanchéité 9 dans sa gorge 10 si le moyen de retenue normal, constitué par la collerette 16 pincée dans la partie étroite 10b de la gorge 10, vient à faire défaut.

A l'intérieur de la partie massive 15 est ménagée une cavité 23 fermée délimitée par deux faces axiales 24 et 25 parallèles à la surface extérieure 19 du joint d'étanchéité 9 et par deux faces parallèles 26 et 27, perpendiculaires aux faces 24 et 25. La longueur des faces 24 et 25 est au moins égale à la longueur L de la projection axiale de la surface de contact 20 entre le joint d'étanchéité et l'obturateur. A l'intérieur de la cavité 23 est disposé un anneau 28 élastique, dont les dimensions sont telles qu'il occupe sans jeu, tout le volume offert par la cavité 23.

Comme on peut le voir à la Figure 3, toute la surface de contact 20 entre le joint d'étanchéité et l'obturateur est ceinturée par cet anneau élastique 28 qui joue le rôle d'une frette. L'anneau peut être réalisé soit en un métal présentant le module d'élasticité adéquat, soit en un matériau composite tel que, par exemple, une résine polymère armée par de la fibre de verre ou de la fibre de carbone.

La collerette annulaire 16, de direction radiale entoure la face 19 de la partie massive 15 du joint d'étanchéité. Elle est formée par la réunion de deux languettes 29 - 30, l'une 29 prolongeant la face radiale 18 de la partie massive 15, et l'autre 30 perpendiculaire à la face 19 axiale de cette même partie massive.

Le fonctionnement du joint d'étanchéité 9 est le suivant. Comme représenté à la Figure 4, le joint d'étanchéité 9 est monté dans la gorge 10. La collerette 16 disposée dans la partie étroite 10b de la gorge 10 est pincée entre le corps de vanne 2 et la bague de retenue 11, assurant la fixation du joint d'étanchéité 9 dans sa gorge 10. Des jeux, aussi bien axiaux j1 et j2 que radial j3, sont ménagés entre la partie massive 15 du joint et la partie large 10a de la gorge 10. Lorsque, comme représenté à la Figure 5, l'obturateur 4 ferme le canal axial 3 et que la pression du fluide s'exerce du côté amont de l'obturateur suivant la direction de la flèche P1, le fluide pénètre, par le jeu axlal j1, entre le corps de vanne 2 et la partie massive 15 du joint appliquant la face 17 de cette dernière contre la face d'appui correspondante constituée par la bague de retenue 11, et tend à déformer l'obturateur 4 dans le sens de la flèche P1. Du fait de cette déformation, la partie massive 15 du joint est comprimée entre l'obturateur 4 et l'anneau élastique 28, ce qui l'empêche de fluer. On obtient ainsi une bonne étanchéité entre le joint et l'obturateur.

Lorsque, comme représenté à la Figure 6, la pression du fluide s'exerce du côté aval de l'obturateur suivant la direction de la flèche P2, le fluide pénètre, par les jeux axial j2 et radial j3, entre la bague de retenue 11 et la partie massive 15 du joint. Il en résulte que cette dernière subit une poussée axiale qui applique la face radiale 18 contre la face d'appui correspondante constituée par le corps de vanne 2 et une poussée radiale qui applique sa face 20 contre l'obturateur 4. Dans ce cas encore, la partie massive du joint est comprimée entre l'obturateur 4 et l'anneau élastique 28, ce qui l'empêche de fluer. A noter que, dans ce dernier cas, l'action du fluide pénétrant entre la face 19 de la partie massive 15 du joint et la bague de retenue 11 augmente la force d'appui de la face 20 de la partie massive 15 sur l'obturateur 4.

Différentes variantes de réalisation du joint d'étanchéité peuvent être envisagées.

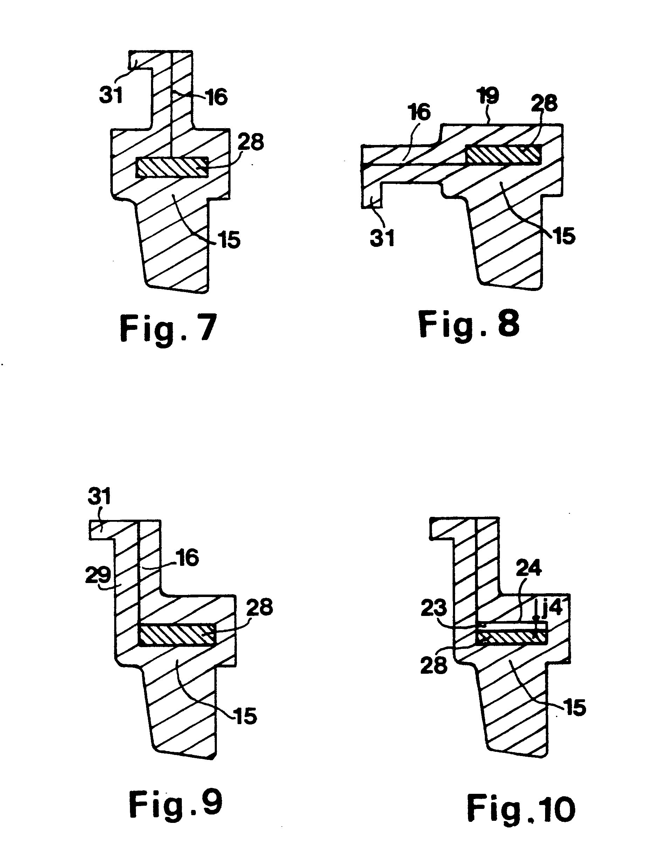

Dans la variante représentée à la Figure 7, la collerette annulaire 16 radiale n'est plus excentrée par rapport à la partie massive 15 du joint mais centrée par rapport à celle-ci.

Dans la variante représentée à la Figure 8, la collerette annulaire 16 n'est plus radiale, mais axiale, dans le prolongement de la face 19 externe de la partie massive du joint.

Dans la variante représentée à la Figure 9, une des languettes 29, 30 constituant la collerette 16 est munie d'un talon 31 perpendiculaire à ladite languette, assurant un meilleur accrochage du joint 9 sur le corps de vanne.

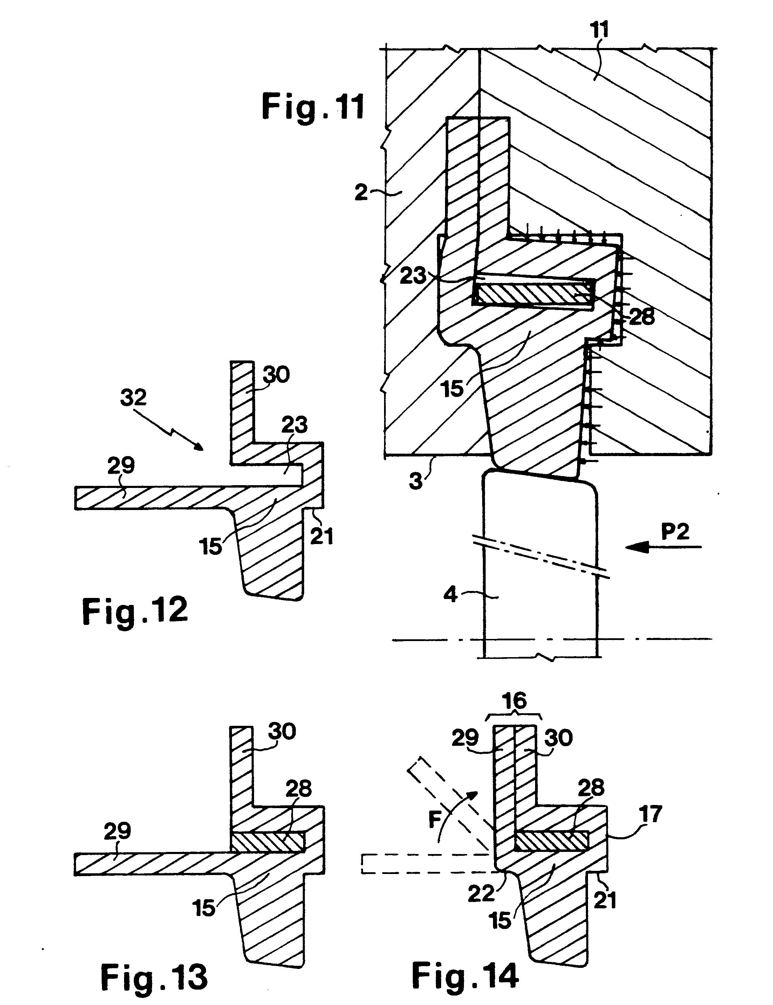

Enfin, dans la variante représentée à la Figure 10, la largeur radiale de la cavité 23 ménagée à l'intérieur de la partie massive 15 du joint d'étanchéité est supérieure à l'épaisseur de l'anneau élastique 28 disposé dans cette cavité. Il en résulte qu'il existe un jeu j4 entre la face externe de l'anneau 28 et la face externe 24 de la cavité 23. Lorsque, comme représenté à la figure 11, la pression du fluide s'exerce du côté aval de l'obturateur suivant la direction de la flèche P2, le fluide, comme il a été mentionné plus haut, exerce à la fois une poussée axiale et une poussée radiale sur la partie massive 15 du joint. Grâce au jeu j4 ménagé entre l'anneau élastique 28 et la cavité 23, la partie massive 15 peut pivoter, sous l'effet de la pression du fluide, en effectuant un mouvement de rotation autour de l'anneau élastique 28 qui amène la surface tronconique 18 a du joint en contact avec la surface correspondante 10C de la gorge 10. Il en résulte un accroissement de la pression de contact joint-obturateur qui augmente l'étanchéité.

Les variantes précédemment décrites et représentées aux figures 7, 8 et 10 peuvent éventuellement elles aussi être munies du talon d'accrochage 31.

Il va être décrit maintenant le procédé de fabrication du joint d'étanchéité décrit ci-avant et de ses variantes.

Les différentes phases de la fabrication du joint d'étanchéité objet de l'invention sont représentées aux Figures 12 à 14. Dans un anneau en P.T.F.E. chargé ou non en poudre d'acier inoxydable ou en poudre de carbone, est réalisée une bague annulaire 32 dont la section méridienne est représentée à la Figure 12. Cette bague comporte une partie massive 15 munie d'un épaulement 21, une gorge 23 axiale, une languette axiale 29 et une languette radiale 30. Puis un anneau élastique 28, dont le volume est très légèrement inférieur à celui de la gorge 23, est inséré dans celle-ci, comme représenté à la Figure 13. Enfin, la languette axiale 29 est rabattue dans le sens de la flèche F, comme représenté à la Figure 14, de façon à ce qu'elle vienne s'appliquer contre la languette radiale 30, l'association des deux languettes 29 et 30 formant la collerette annulaire 16. Ce rabattement est effectué de la façon suivante:

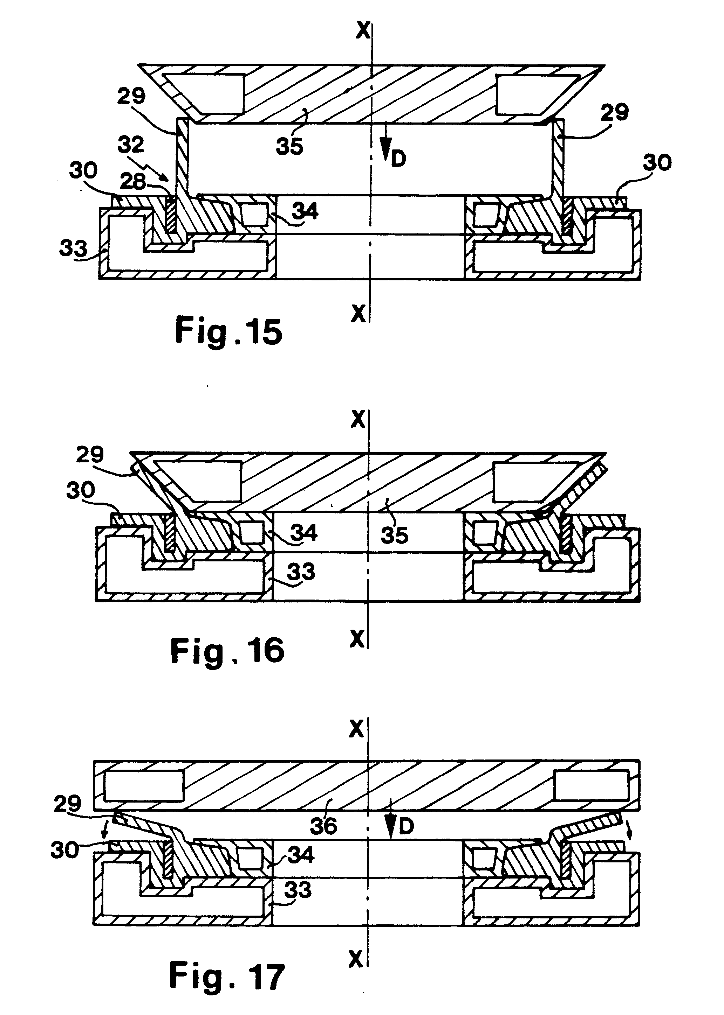

la bague 32, munie de l'anneau élastique 28, est placée, comme représenté à la Figure 15, sur un plateau chauffant 33 annulaire qui en épouse la forme extérieure. Une forme chauffante 34, prenant appui sur le plateau 33, est disposée à l'intérieur de la bague usinée 32. Le plateau 33 et la forme 34 sont creux et leur chauffage est assuré soit par la circulation d'un fluide chaud, soit au moyen de résistances électriques. Le plateau 33 et la forme 34 sont chauffés entre 250 et 300°C, la température choisie dépendant de la nature du matériau constituant la bague 32 polymère d'hydrocarbure fluoré pur ou mélangé avec de la poudre de carbone ou de la poudre d'acier inoxydable. La bague 32 est chauffée par conduction thermique par le plateau 33 et la forme 34 qui assurent en même temps son maintien. Un outil 35, de forme tronconique de révolution, coaxiale à la bague 32, chauffé à la même température que le plateau 33 et la forme 34, est engagé à l'intérieur du cylindre formé par la languette axiale 30 et déplacé par un mouvement de translation selon l'axe X-X dans la direction indiquée par la flèche D. Sous la poussée de l'outil 35, la languette axlale 29 se déforme vers l'extérieur jusqu'à venir occuper une position intermédiaire comme représenté à la Figure 16. Dans cette position, la languette 29 est inclinée d'environ 40° sur l'horizontale et est en contact sur toute sa longueur avec la partie tronconique de l'outil 35. Ce dernier est alors retiré et remplacé par un second outil 36 plan, chauffé lui aussi, qui au cours d'un mouvement de translation selon l'axe X-X dans la direction de la flèche D, comme représenté à la Figure 17, rabat la languette 30, alors en position inclinée, contre la languette axiale 29, donnant ainsi au joint d'étanchéité sa forme définitive. Le plateau 33, la forme 34 et l'outil 36 sont ensuite refroidis puis le joint d'étanchéité 9 est dégagé du plateau 33 et de la forme 34.

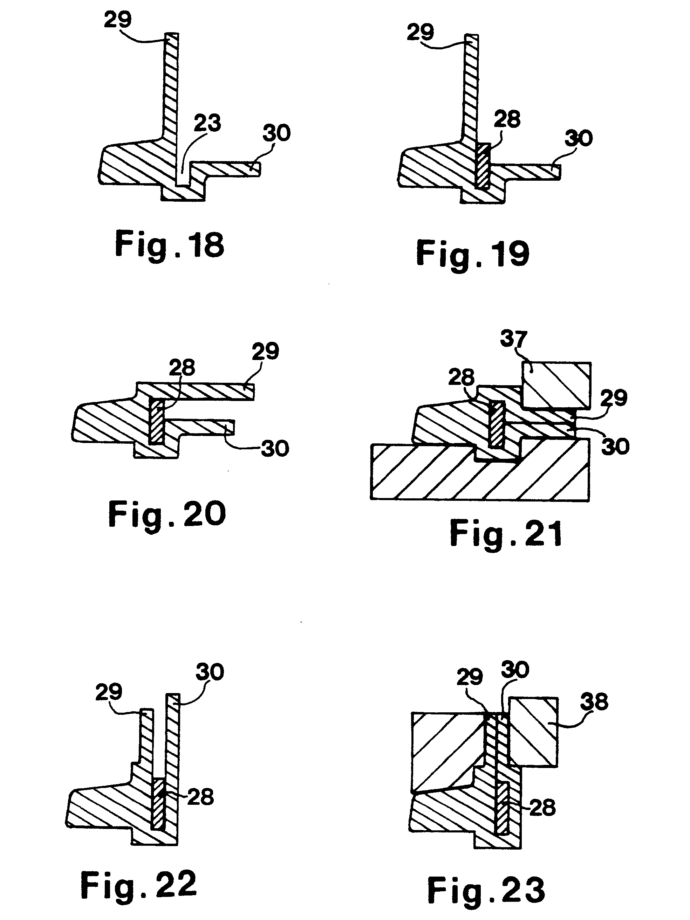

Les différentes phases de la fabrication de la variante du joint d'étanchéité représentée à la Figure 7 dans laquelle la collerette 16 annulaire est centrée par rapport à la partie massive 15 du joint sont représentées aux Figures 18 à 21. On part d'une bague annulaire dont la collerette radiale 30 est sensiblement dans le prolongement de la face radiale de la partie massive 15 (figure 18) pour arriver, en utilisant l'outillage décrit ci-avant, après avoir introduit l'anneau 28 (figure 19) dans la cavité 23 à une configuration intermédiaire dans laquelle les languettes 29, 30 sont parallèles mais non encore en contact (figure 20). Un troisième outil 37 chauffé, en forme de couronne circulaire permet alors d'appliquer la languette 29 contre la languette 30 maintenue fixe (figure 21).

Pour obtenir la variante du joint d'étanchéité représentée à la Figure 8 dans laquelle la collerette 16 annulaire est axiale on part d'une bague annulaire, telle que celle représentée à la Figure 22, dont les languettes axiales 29, 30 sont parallèles et définissent une gorge dans laquelle est inséré l'anneau élastique 28. Après insertion de ce dernier, la languette extérieure 30 est repoussée par un outil chauffant en forme de couronne circulaire 38, contre la languette intérieure 29 maintenue fixe pour former une collerette de direction axiale (figure 23).

Le joint d'étanchéité objet de l'invention présente les avantages suivants:
- ce joint d'étanchéité présente à la fois des caractéristiques d'inertie chimique et de tenue en température dues au matériau qui le constitue (polymère d'hydrocarbure fluoré) et d'élasticité due à la présence de l'anneau élastique enfermé dans le joint.
- ce joint fonctionne en joint automatique, que la pression du fluide s'exerce du côté amont ou du côté aval de l'obturateur.
- l'anneau élastique, qui est placé dans une cavité fermée de la partie massive du joint, n'est pas en contact avec le fluide circulant dans la vanne, ce qui est très avantageux lorsque ce fluide est corrosif. Il en résulte qu'il n'est pas nécessaire d'utiliser un métal coûteux résistant à la corrosion pour réaliser l'anneau élastique.
- le procédé de fabrication permet d'obtenir un joint géométriquement précis, tout en étant économique.

**Revendications**

1. Joint d'étanchéité résistant aux hautes températures et aux hautes pressions pour une vanne (1) comportant un corps (2) délimitant un canal axial (3) d'axe X-X dans lequel est disposé un obturateur rotatif (4), ce joint (9) étant réalisé en un matériau ne pouvant être mis en oeuvre que par frittage, tel qu'un polymère d'hydrocarbure fluoré et comprenant
- une partie massive (15) en forme d'anneau circulaire d'axe X-X,
- une collerette (16) annulaire coaxiale s'étendant de cette partie massive dans une direction radiale ou axiale,
- et un anneau élastique (28) d'axe X-X, appliquant la partie massive (15) contre l'obturateur (4) de la vanne et logé dans une cavité (23), fermée, ménagée dans la partie massive (15),
ce joint (9) est monté dans une gorge (10), usinée en partie dans le corps de vanne (2) et en partie dans une bague de retenue annulaire (11) coaxiale au corps (2), la gorge comportant une partie large (10a), débouchant dans le canal axial (3) du corps de vanne (2) et une partie étroite (10b) dans laquelle est pincée la collerette (16) annulaire du joint (9),
caractérisé en ce que la cavité (23) et l'anneau élastique (28) ont une section transversale rectangulaire, le grand côté de la section de l'anneau élastique (28) est parallèle à l'axe X-X et a une longueur au moins égale à la longueur (L) de la projection axiale de la surface de contact (20) entre l'obturateur rotatif (4) et la partie massive (15) du joint d'étanchéité (9), l'anneau élastique jouant ainsi le rôle de frette en ceinturant toute cette surface de contact (20).

2. Joint d'étanchéité selon la revendication 1 caractérisé en ce que l'anneau élastique (28) a des dimensions telles qu'il occupe la totalité du volume offert par la cavité (23).

3. Joint d'étanchéité selon la revendication 1 caractérisé en ce que l'épaisseur de l'anneau élastique (28) est inférieure à la largeur radiale de la cavité (23), de telle sorte qu'il existe un jeu radial (j4) entre la face externe de l'anneau élastique (28) et la face (24) externe de la cavité (23).

4. Joint d'étanchéité selon la revendication 1 caractérisé en ce que l'anneau élastique (28) est en métal.

5. Joint d'étanchéité selon la revendication 1 caractérisé en ce que l'anneau élastique (28) est en matériau composite, par exemple en résine polymère armée par de la fibre de verre ou de la fibre de carbone.

6. Procédé de fabrication d'un joint d'étanchéité selon l'une quelconque des revendications 1 à 5 caractérisé en ce que:
- on réalise une bague annulaire (32) en polymère d'hydrocarbure fluoré chargé ou non comportant, une partie massive (15), dans laquelle est ménagée une gorge axiale (23) et deux languettes (29, 30);
- on introduit un anneau élastique (28), selon une translation axiale, dans la gorge (23) de la bague annulaire (32);
- une (29) des deux languettes est rapprochée de l'autre languette (30), jusqu'à ce que celles-ci soient en contact, par rabattement; l'association des deux languettes (29, 30) ʻ⁓ contu⌣i forme la collerette annulaire (16) du joint d'étanchéité, et, en fermant la gorge axiale (23) du côté opposé à la partie massive (15), définit la cavité fermée (23) du joint.

7. Procédé de fabrication d'un joint d'étanchéité selon la revendication 6, caractérisé en ce que l'une des languettes est rapprochée de l'autre, jusqu'à ce qu'elles soient en contact, par repoussage.

**Patentansprüche**

1. Gegen hohe Temperaturen und hohe Drücke beständiger Abdichtungsring für ein Ventil (1) mit einem einen axialen Kanal (3) mit einer Achse X-X begrenzenden Gehäuse (2), in welchem ein drehbares Absperrelement (4) angeordnet ist, wobei der Dichtungsring (9) aus einem nur durch Sintern verarbeitbaren Material, wie insbesondere einem fluorierten Kohlenwasserstoff-Polymer hergestellt ist und gebildet ist durch:
   - einen massiven Teil (15) in Form eines Kreisringes mit der Achse X-X,
   - einen koaxialen ringförmigen Bund (16), der sich vom massiven Teil in einer radialen oder axialen Richtung erstreckt,
   - und durch einen elastischen Ring (28) mit der Achse X-X, der das massive Teil (15) gegen das Absperrelement (4) des Ventils drückt und in einem geschlossenen und im massiven Teil (15) angeordneten Hohlraum (23) untergebracht ist,
   und wobei der Dichtungsring (9) in einer Nut (10) angeordnet ist, welche teils im Ventilgehäuse (2) und teils in einem ringförmigen und zum Gehäuse (2) koaxialen Halteglied (11) ausgebildet ist, einen breiten Abschnitt (10a) aufweist, der in den axialen Kanal (3) des Ventilgehäuses (2) mündet, und einen schmalen Abschnitt (10b) besitzt, in welchem der ringförmige Bund (16) des Dichtungsrings (9) eingeklemmt ist,
   dadurch gekennzeichnet,
   daß der Hohlraum (23) und der elastische Ring (28) einen rechteckförmigen Querschnitt aufweisen, daß die große Rechteckseite des Querschnitts des elastischen Rings (28) parallel zur Achse X-X verläuft und eine Länge mindestens gleich der Länge (L) der axialen Projektion der Kontaktfläche (20) zwischen drehbarem Absperrelement (4) und dem massiven Teil (15) des Dichtungsrings (9) aufweist, so daß der elastische Ring Armierungsfunktion besitzt und die gesamte Kontaktfläche (20) umgürtet.

2. Dichtungsring nach Anspruch 1, dadurch gekennzeichnet, daß der elastische Ring (28) derartige Abmessungen aufweist, daß er das gesamte Volumen des Hohlraumes (23) ausfüllt.

3. Dichtungsring nach Anspruch 1, dadurch gekennzeichnet,

daß die Dicke des elastischen Ringes (28) kleiner als die radiale Breite des Hohlraumes (23) ist, derart, daß zwischen der Außenfläche des elastischen Rings (28) und der äußeren Fläche (24) des Hohlraumes (23) ein radiales Spiel (j4) vorhanden ist.

4. Dichtungsring nach Anspruch 1, dadurch gekennzeichnet, daß der elastische Ring (28) aus Metall gebildet ist.

5. Dichtungsring nach Anspruch 1, dadurch gekennzeichnet, daß der elastische Ring (28) aus einem Verbundmaterial hergestellt ist, beispielsweise aus polymerem Kunststoff, der durch Glasfasern oder Kohlenstoffasern verstärkt ist.

6. Verfahren zur Herstellung eines Dichtungsringes nach einem der Ansprüche 1 bis 5,
   dadurch gekennzeichnet:
   - daß ein ringförmiges Teil (32) aus einem Polymer von beladenem oder nicht beladenem Fluorkohlenwasserstoff hergestellt wird, welcher ein massives Teil (15) aufweist, in welchem eine axiale Nut (23) und zwei Zungen (29, 30) ausgebildet sind;
   - daß ein elastischer Ring (28) axial in die Nut (23) des ringförmigen Teils (32) eingeführt wird;
   - daß eine (29) der beiden Zungen der anderen Zunge (30) soweit angenähert wird, bis sich die Zungen infolge Herumklappens in Kontakt miteinander befinden, wobei infolge des Kontaktes der beiden Zungen (29, 30) der ringförmige Bund (16) des Dichtungsringes gebildet wird und nach Schließen der axialen Nut (23) von der gegenüberliegenden Seite des massiven Teils (15) der geschlossene Hohlraum (23) des Dichtungsringes gebildet wird.

7. Verfahren zur Herstellung eines Dichtungsrings nach Anspruch 6,
   dadurch gekennzeichnet,
   daß die eine der Zungen der anderen durch Drücken bis zum Kontakt angenähert wird.

**Claims**

1. Seal which withstands high temperatures and high pressures for a valve (1) comprising a body (2) defining an axial channel (3) on the axis X-X in which a rotating closure member (4) is located, this seal (9) being made from a material which can only be made use of by fritting, such as a fluorinated hydrocarbon polymer and comprising:
   - a solid part (15) in the form of a circular ring on the axis X-X,
   - a coaxial annular flange (16) extending from this solid part in a radial or axial direction,
   - and a resilient ring (28) on the axis X-X, pressing the solid part (15) against the closure member (4) of the valve and housed in a closed cavity (23), provided in the solid part (15), this seal (9) is mounted in a groove (10), machined partly in the valve body (2) and partly in an annular retaining ring (11) coaxial with the body (2), the groove comprising a wide part (10a) opening into the axial channel (3) of the valve body (2) and a narrow part (10b) in which the annular flange (16) of the seal (9) is gripped, characterised in that the cavity (23) and the resilient ring (28) have a rectangular cross-section, the major side of the section of the resilient ring (28) is parallel to the axis X-X and has a length at least equal to the length (L) of the axial projection of the contact surface (20) between the rotating closure member (4) and the solid part (15) of the seal (9), the resilient ring thus fulfilling the function of a collar by surrounding this entire contact surface (20).

2. Seal according to Claim 1, characterised in that the resilient ring (28) has dimensions such that it occupies the entire volume provided by the cavity (23).

3. Seal according to Claim 1, characterised in that the thickness of the resilient ring (28) is less than the radial width of the cavity (23), so that a radial clearance (j4) exists between the outer face of the resilient ring (28) and the outer face (24) of the cavity (23).

4. Seal according to Claim 1, characterised in that the resilient ring (28) is made of metal.

5. Seal according to Claim 1, characterised in that the resilient ring (28) is made of a composite material, for example of a polymer resin reinforced by glass fibres or carbon fibres.

6. Method for the manufacture of a seal according to one of Claims 1 to 5, characterised in that:

- an annular ring (32) of reinforced or non-reinforced fluorinated hydrocarbon polymer is produced, comprising a solid part (15), in which an axial groove (23) and two tongues (29, 30) are provided;

- a resilient ring (28) is introduced by axial translation into the groove (23) of the annular ring (32);

- one (29) of the two tongues is moved towards the other tongue (30) until the latter are in contact, by folding back; the association of the two tongues (29, 30) in contact forms the annular flange (16) of the seal and, by closing the axial groove (23) on the side opposite the solid part (15), defines the closed cavity (23) of the seal.

7. Method for the manufacture of a seal according to Claim 6, characterised in that one of the tongues is moved towards the other, until they are in contact, by pushing back.

Fig. 1

Fig. 2

Fig. 3

## Fig. 4

## Fig. 5

## Fig. 6

Fig. 7

Fig. 8

Fig. 9

Fig. 10

0 166 286

Fig.11

Fig.12

Fig.13

Fig.14

P2

7

**Fig. 15**

**Fig. 16**

**Fig. 17**

**Fig.18**

**Fig.19**

**Fig.20**

**Fig.21**

**Fig.22**

**Fig.23**